# EUROPEAN PATENT APPLICATION

(11) **EP 1 916 145 A1**
(43) Date of publication of application: **30.04.2008**
(21) Application number: 06255551.1
(22) Date of filing: 27.10.2006
(51) Int. Cl.: B60K 15/077

(54) **Fuel module for a blow-moulded fuel tank and method of assembly thereof**

(71) Applicant: Delphi Technologies, Inc., Troy, Michigan 48007 (US)
(72) Inventor: Marx, Patrice, 54650 Saulnes (FR); Sanchez, Michel, Allondrelle 54260 (FR); Metzen, Rainer, 9807 Hosingen (LU)
(74) Representative: Waller, Stephen

(57) **Abstract**

A fuel module for a blow-moulded fuel tank, said fuel module comprising a first fuel reservoir module 2 insertable through an access opening in the fuel tank, a second fuel reservoir module 4 insertable through the access opening in the fuel tank, one of said first and second reservoir modules having a fuel pump mounted therein, said first and second reservoir modules being provided with interconnection means 30,32 whereby the first and second reservoir modules are interconnectable within the fuel tank to define a single fuel reservoir whereby, when interconnected, the interior of the first reservoir module is in fluid communication with the interior of the second reservoir module to provide increased fuel volume for the fuel pump.

## Description

The present invention relates to a fuel module for a vehicle fuel tank and in particular to a fuel module for a blow-moulded fuel tank and to a method of assembly thereof.

A fuel pump is typically provided in a vehicle fuel tank to pump fuel to the fuel from the tank to the fuel delivery system (e.g. carburettor or fuel injection system) of the engine.

It is desirable to position the inlet of the fuel pump as near as possible to the lowest level in the tank so that a source of fuel will be available even when fuel level is low. Despite such a placement of the fuel inlet, events during vehicle operation such as cornering, braking and acceleration can cause the fuel to "slosh" around, potentially uncovering the fuel pump inlet. Driving or parking on a slope could similarly result in the fuel pump inlet being uncovered. When the inlet is exposed, the fuel pump sucks air (or fuel vapour) causing the engine to stammer and stall. An additional problem occurs at engine start-up when fuel tank level is low and there is insufficient fuel at the pump inlet.

In order to mitigate this problem, the fuel pump is usually provided in a fuel module defined by a fuel reservoir adapted to maintain a supply of fuel around the inlet of the fuel pump. Fuel is typically aspirated into the fuel reservoir by means of one or more jet pumps, drawings fuel into the reservoir from the lowermost points of the fuel tank. The fuel module may also contain a number of other components, such as a fuel filter, pressure regulator, fuel level sensor etc.

In a traditional steel fuel tank it is relatively easy to located the fuel module and its associated components into the fuel tank because the tank is usually formed from two halves, each half being pressed from a sheet of metal, the two halves subsequently being joined together along a seam. The fuel module can be located in the lower half of the tank before the upper half is attached.

Due to the packaging requirements and the need to minimise weight, blow moulded polymeric fuel tanks are advantageously used in modern vehicles due to their ability to be readily moulded to complex shapes, due to their light weight, and the reduction in the possibility of leakages due to the one piece construction of such tanks.

However, a disadvantage of blow-moulded polymeric fuel tanks is the limited accessibility to the interior of the tank once it has been formed which causes problems when mounting the fuel module within the tank. GB 2,101,520 and WO 97/25219 attempt to resolve this problem by placing the fuel module within the fuel tank during manufacture. By placing the fuel module within the former in which the tank is moulded, the tank can be moulded around the fuel module and the only apertures that need to be made in the tank are those required for the fuel filler and any fuel delivery and vent pipes. A problem with such arrangement is that the fuel module cannot subsequently be removed for maintenance or repair.

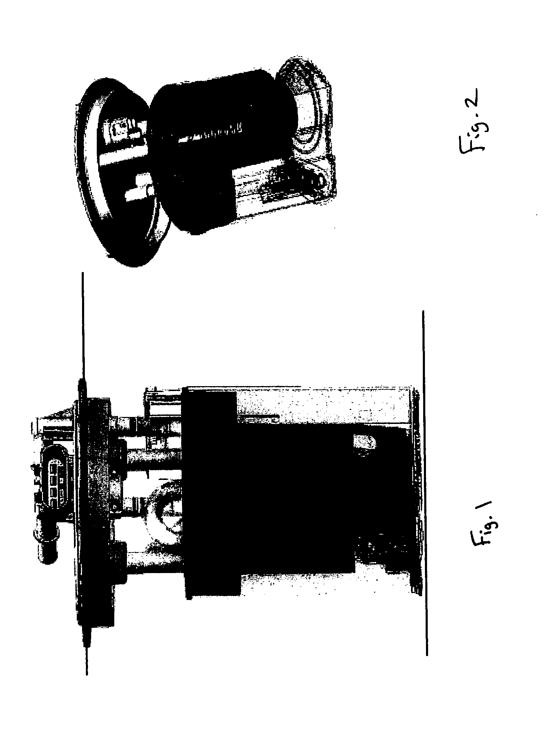

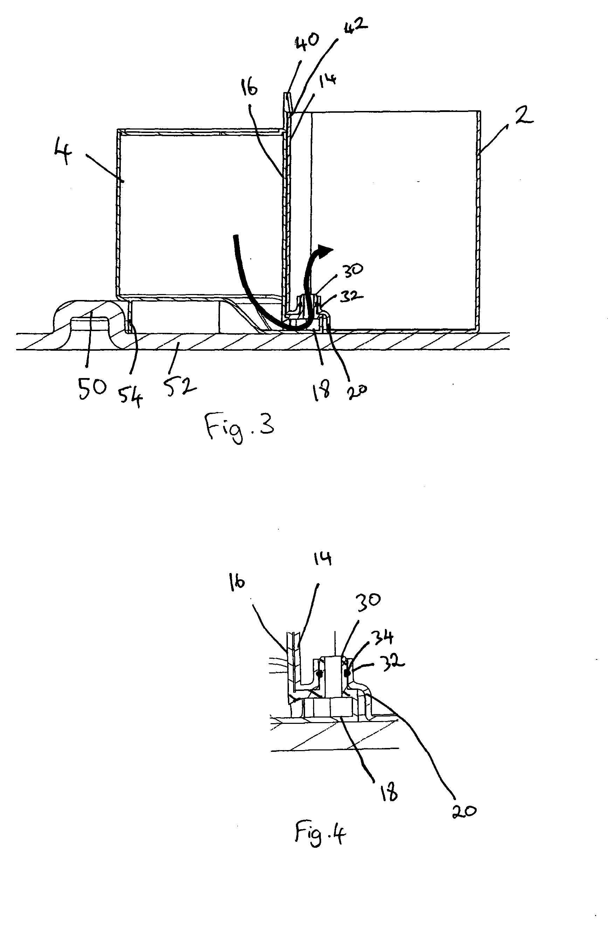

Another option is to ensure that the dimensions of the fuel module are such that the fuel module can be inserted through a relatively small access opening in an upper part of fuel tank. A mounting flange provided on an upper part of the fuel module is securable within the access opening to close the access opening and hold the fuel module in place within the fuel tank. An example of such known fuel module arrangement is shown in figures 1 and 2. However, such requirement places severe limitations on the volume of the fuel reservoir. For vehicles having larger engines (and thus greater fuel consumption) or those required to operate in more extreme conditions (e.g. off-road vehicles), the available reservoir volume may be insufficient, particularly when the fuel module must house a large number of additional components.

According to a first aspect of the present invention there is provided a fuel module for a blow-moulded fuel tank, said fuel module comprising a first fuel reservoir module insertable through an access opening in the fuel tank, a second fuel reservoir module insertable through the access opening in the fuel tank, one of said first and second reservoir modules having a fuel pump mounted therein, said first and second reservoir modules being provided with interconnection means whereby the first and second reservoir modules are interconnectable within the fuel tank to define a single fuel reservoir whereby, when interconnected, the interior of the first reservoir module is in fluid communication with the interior of the second reservoir module.

Locking means may be provided for locking said interconnection means together.

Preferably said first and second reservoir modules each comprise hollow tubular cup-like bodies having a diameter substantially equal to the diameter of the access opening of the fuel tank.

The interconnection means preferably includes fluid communication means whereby the interior of the first reservoir module is in fluid communication with the interior of the second reservoir module.

In a preferred embodiment, the interconnection means comprises a male connection member provided at or adjacent a lower region of one of the first and second reservoir modules and a female connection member provided at or adjacent a lower region of the other of the first and second reservoir modules, said male connection member being receivable within said female connection member and said male and female connection members each having a fluid passageway formed therethrough, said fluid passageways cooperating to provide a flow path for fuel between said first and second reservoir modules when said male connection member is received in said female connection member. Seal means, such as an O-ring, may be provided on one or both of the male and female connection members.

Preferably said male connection member is provided on a lower portion of the first reservoir module, said male connection member extending upwardly with respect to the normal orientation of the first reservoir module, said female connection member being provided on a lower region of the second reservoir module whereby said second reservoir module can be connected to said first reservoir module, said male connection member entering said female connection member, by means of a downward movement of the second reservoir module with respect to said first reservoir module.

The first reservoir module may include a side region shaped and/or recessed to receive a side region of the second reservoir module in nested side by side relationship. Preferably a connection formation extends radially outwardly from said first reservoir module at a lower end of said side region of the first member, said male connection member extending upwardly from an upper face of said formation, a recess being provided at a lower end of said side region of said second reservoir module adapted to receive said connection region of the first reservoir module, said female connection member being provided on a lower face of said recess.

A resilient clip may be provided at an upper end of said side region of the first reservoir module engageable with an upper edge of said side region of said side region of the second reservoir module when said male connecting member is inserted into said female connecting member to lock the first and second reservoir modules together.

One or more further components, such as a pressure regulator and/or a fuel level sensor and/or a venturi aspirator and associated pipe work, may be mounted in one or both of the first and second reservoir modules.

According to a second aspect of the present invention there is provided a blow-moulded fuel tank and a fuel module insertable and mountable therein, the fuel module comprising a fuel module according to the first aspect of the present invention, said fuel tank having one or more formations formed on an inner surface thereof for locating one of said first and second reservoir modules of the fuel module thereagainst to assist correct location of the fuel module within the fuel tank.

Preferably said one ore more formations comprises one or more raised rib-like projections formed on the inner surface of the fuel tank forming a seat against which said first or second reservoir module of the fuel module is locatable to enable pre-location of one of the first and second reservoir modules before insertion of the other of the first and second reservoir modules and interconnection of the first and second reservoir modules.

According to a further aspect of the present invention there is provided a method of mounting a fuel module in a blow-moulded fuel tank comprising the steps of inserting a first fuel reservoir module through a access opening of the fuel tank and locating said first reservoir module against an inner surface of the fuel tank, inserting a second reservoir module through the access opening of the fuel tank and locating the second module against the inner surface of the fuel tank, including the step of interconnecting said first and second reservoir modules together during location of the second module, whereby the interior of the first reservoir module is in fluid communication with the second reservoir module to define a single fuel reservoir for a fuel pump of the fuel module, said fuel pump being mounted within one of said first and second fuel reservoir modules.

Preferably said interconnection step comprises inserting a male connecting member provided on one of the first and second reservoir modules into a female connecting member provided on the other of the first and second reservoir modules, whereby each of the male and female connecting members have a fluid passageway formed therethrough, said fluid passageways cooperating to provide a flow path for fuel between said first and second reservoir modules when said male connection member is inserted in said female connection member.

Said step of locating said first reservoir module against the inner surface of the fuel tank may further comprise locating said first reservoir module against one or more formations formed on the inner surface of the fuel tank to assist correct location of the fuel module within the fuel tank.

A preferred embodiment of the present invention will now be described, by way of example only, with reference to the accompanying drawings, in which:-
Figure 3 is a sectional view of a two-part fuel module according to a preferred embodiment of the present invention shown in position in a fuel tank;
Figure 4 is a detailed sectional view of the interconnection means of the two-part fuel module of Figure 1, and;
Figures 5a to 5d show the method of mounting the fuel module of Figure 1 into a vehicle fuel tank through the access opening.

As shown in the drawings, the fuel module comprises a first reservoir module 2, containing the fuel pump and other associated components, such as fuel regulator, venturi aspirators, fuel tank level gauge and associated hoses and wiring (not shown), and a second reservoir module 4 providing increased reservoir fuel volume. The first reservoir module 2 is essentially equivalent to the known fuel module shown in Figs 1 and 2 with the addition of the connection means for interconnection with the second reservoir module. The first reservoir module 2 is provided with an upper mounting flange (not shown) securable within the access opening of the fuel tank to hold the fuel module in place within the fuel tank in the known manner.

An interconnection means, comprising a male connection member mounted on the second module and a female connection mounted on the first module, is provided for joining the two reservoir modules together and providing a fuel path between the two reservoir modules to define a single fuel reservoir.

Each of the first and second reservoir 2,4 modules comprise a substantially tubular cup-like body defining a closed fuel reservoir. The diameter of each of the first and second reservoir modules is selected to enable each module to be readily inserted through the small diameter access opening 10 in upper part 12 of the fuel tank. (Fig 5c)

Cooperating side portions 14,16 of the first and second reservoir modules 2,4 respectively are shaped to mate with one another to enable the reservoir modules 2,4 to be placed in nested side by side configuration, a concave recess being formed on the side 16 of the second reservoir module to receive a curved side portion 14 of the first reservoir module. A radially projecting extension 18 on a lower region of the second module extending from a lower region of said cooperating side portion 16 of the second reservoir 4 module is receivable in a corresponding recess 20 provided on a lower region of the first reservoir module 2 adjacent said cooperating side portion 14 of the first reservoir module 2.

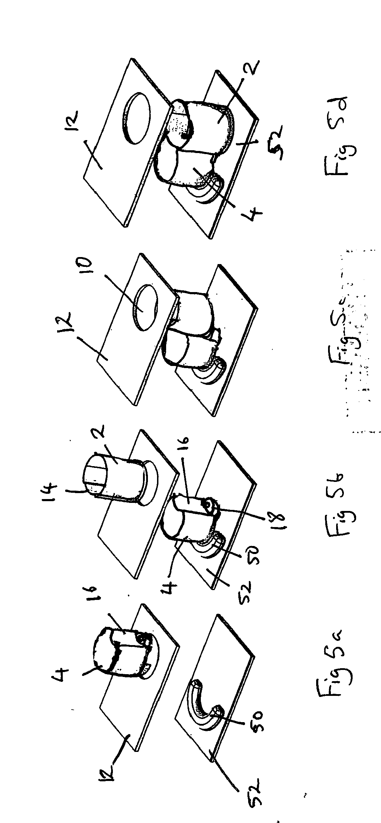

As best shown in Fig. 4, the male connection member of the interconnection means comprises a spigot 30 formed on the radially projecting region 18 of the second module 4, extending upwardly from an upper face thereof to be receivable in the female connection member comprising a corresponding opening 32 formed on a lower face of the recess 20 of the first reservoir module 2. An O-ring seal 34 is provided around the circumference of the spigot 30 to form a fuel tight seal within the opening 32 in the first reservoir module 2. As shown in Fig. 3, a locking clip 40 is formed on an upper end of the recessed side portion 16 of the second reservoir module 4 adapted to clip over an upper edge 42 of the cooperating side portion 14 of the first reservoir module 2 when the male connecting member is fully inserted into the female connection member to resiliently lock the first and second reservoir modules together.

In order to enable correct placement of the fuel module, and in particular the second reservoir module 4, during insertion, a raised locating projection 50 is provided on the inner surface 52 of the fuel tank against which a portion 54 of the second reservoir module 4 can be abutted to ensure correct location of the second reservoir 4 module before insertion of the first reservoir module 2, as will be described in more detail below.

With reference to Figs. 5a to 5d, the method of mounting the fuel module in the fuel tank will now be described.

Firstly the second reservoir module 4 is inserted through the tank opening 10 and located against the raised locating projection 50 on the bottom surface 52 of the fuel tank to ensure correct location of the second reservoir module 4, as shown in Figs 3a and 3b.

Next the first reservoir module 2, containing the fuel pump and associated components, is inserted through the tank opening 10 and slid axially alongside the second reservoir module 2 with the cooperating side portions 14,16 in abutting relationship so that the spigot 30 on the second reservoir module 4 is guided into the opening 32 on the first reservoir module 2, as shown in Figs 3b and 3c.

Finally the first reservoir module 2 is pushed down until the locking clip 40 clips over the upper edge 42 of the first reservoir module 2 to lock the two modules together and the upper mounting flangs is secured within the access opening to hold the fuel module in place within the fuel tank.

Normally the diameter of the tank access opening limits the volume of the fuel reservoir to around 0.3 to 04 litre where only a single piece cylindrical reservoir is used because most of the volume of the reservoir is taken up by the fuel pump, pressure regulator and associated components. By combining two reservoir modules, the present invention provides an additional reservoir volume of between 0.5 and 1 litre.

Various modifications and variations to the described embodiment of the invention will be apparent to those skilled in the art without departing from the scope of the invention as defined in the appended claims. Although the invention has been described in connection with a specific preferred embodiment, it should be understood that the invention as claimed should not be unduly limited to such specific embodiment.

## Claims

1. A fuel module for a blow-moulded fuel tank, said fuel module comprising a first fuel reservoir module insertable through an access opening in the fuel tank, a second fuel reservoir module insertable through the access opening in the fuel tank, one of said first and second reservoir modules having a fuel pump mounted therein, said first and second reservoir modules being provided with interconnection means whereby the first and second reservoir modules are interconnectable within the fuel tank to define a single fuel reservoir whereby, when interconnected, the interior of the first reservoir module is in fluid communication with the interior of the second reservoir module.

2. A fuel module as claimed in claim 1, wherein locking means are provided for locking said interconnection means together.

3. A fuel module as claimed in any preceding claim, wherein said first and second reservoir modules each comprise hollow tubular cup-like bodies having a diameter substantially equal to the diameter of the access opening of the fuel tank.

4. A fuel module as claimed in any preceding claim, wherein the interconnection means includes fluid communication means whereby the interior of the first reservoir module is in fluid communication with the interior of the second reservoir module.

5. A fuel module as claimed in claim 4, wherein the interconnection means comprises a male connection member provided at or adjacent a lower region of one of the first and second reservoir modules and a female connection member provided at or adjacent a lower region of the other of the first and second reservoir modules, said male connection member being receivable within said female connection member and said male and female connection members each having a fluid passageway formed therethrough, said fluid passageways cooperating to provide a flow path for fuel between said first and second reservoir modules when said male connection member is received in said female connection member.

6. A fuel module as claimed in claim 5, wherein seal means is provided on one or both of the male and female connection members.

7. A fuel module as claimed in claim 6, wherein the seal means comprises an O-ring.

8. A fuel module as claimed in any of claims 5 to 7, wherein said male connection member is provided on a lower portion of the first reservoir module, said male connection member extending upwardly with respect to the normal orientation of the first reservoir module, said female connection member being provided on a lower region of the second reservoir module whereby said second reservoir module can be connected to said first reservoir module, said male connection member entering said female connection member, by means of a downward movement of the second reservoir module with respect to said first reservoir module.

9. A fuel module as claimed in any preceding claim, wherein the first fuel reservoir module includes a side region shaped and/or recessed to receive a side region of the second fuel reservoir module in nested side by side relationship.

10. A fuel module as claimed in claim 9, wherein a connection formation extends radially outwardly from said first reservoir module at a lower end of said side region of the first member, said male connection member extending upwardly from an upper face of said formation, a recess being provided at a lower end of said side region of said second reservoir module adapted to receive said connection region of the first reservoir module, said female connection member being provided on a lower face of said recess.

11. A fuel module as claimed in claim 10, wherein a resilient clip is provided at an upper end of said side region of the first reservoir module engageable with an upper edge of said side region of said side region of the second reservoir module when said male connecting member is inserted into said female connecting member to lock the first and second reservoir modules together.

12. A fuel module as claimed in any preceding claim, wherein one or more further components, such as a pressure regulator and/or a fuel level sensor and/or a venturi aspirator and associated pipe work, may be mounted in one or both of the first and second reservoir modules.

13. In combination, a blow-moulded fuel tank and a fuel module insertable and mountable therein, the fuel module comprising a fuel module as claimed in any preceding claim, said fuel tank having one or more formations formed on an inner surface thereof for locating one of said first and second reservoir modules of the fuel module thereagainst to assist correct location of the fuel module within the fuel tank.

14. A fuel tank and fuel module as claimed in claim 13, wherein said one ore more formations comprises one or more raised rib-like projections formed on the inner surface of the fuel tank forming a seat against which said first or second reservoir module of the fuel module is locatable to enable pre-location of one of the first and second reservoir modules before insertion of the other of the first and second reservoir modules and interconnection of the first and second reservoir modules.

15. A method of mounting a fuel module in a blow-moulded fuel tank comprising the steps of inserting a first fuel reservoir module through a access opening of the fuel tank and locating said first reservoir module against an inner surface of the fuel tank, inserting a second reservoir module through the access opening of the fuel tank and locating the second module against the inner surface of the fuel tank, including the step of interconnecting said first and second reservoir modules together during location of the second module, whereby the interior of the first reservoir module is in fluid communication with the second reservoir module to define a single fuel reservoir for a fuel pump of the fuel module, said fuel pump being mounted within one of said first and second fuel reservoir modules.

16. A method as claimed in claim 15, wherein said interconnection step comprises inserting a male connecting member provided on one of the first and second reservoir modules into a female connecting member provided on the other of the first and second reservoir modules, whereby each of the male and female connecting members have a fluid passageway formed therethrough, said fluid passageways cooperating to provide a flow path for fuel between said first and second reservoir modules when said male connection member is inserted in said female connection member.

17. A method as claimed in claim 16, wherein said step of locating said first reservoir module against the inner surface of the fuel tank further comprises locating said first reservoir module against one or more formations formed on the inner surface of the fuel tank to assist correct location of the fuel module within the fuel tank.
